# EUROPÄISCHE PATENTSCHRIFT

(11) **EP 2 222 384 B1**
(45) Veröffentlichungstag und Bekanntmachung des Hinweises auf die Patenterteilung: **14.02.2018**
(21) Anmeldenummer: 08864848.0
(22) Anmeldetag: 04.12.2008
(51) Int. Cl.: B01D 35/153, B01D 35/16

(54) **FILTEREINRICHTUNG UND FILTERELEMENT**
FILTER DEVICE AND FILTER ELEMENT
DISPOSITIF ET ÉLÉMENT DE FILTRAGE

(30) Priorität: 21.12.2007 DE 102007062102
(43) Veröffentlichungstag der Anmeldung: 01.09.2010
(73) Patentinhaber: MAHLE International GmbH, 70376 Stuttgart (DE)
(72) Erfinder: GRASS, Uwe, 70569 Stuttgart (DE); SCHMID, Mike, 72072 Tübingen (DE); WIDMAIER, Andreas, 71083 Herrenberg (DE)
(74) Vertreter: BRP Renaud & Partner mbB Rechtsanwälte Patentanwälte Steuerberater
(86) Internationale Anmeldenummer: PCT/EP2008/066751
(87) Internationale Veröffentlichungsnummer: WO 2009/080455

(56) Entgegenhaltungen:
- EP-A- 1 229 985
- EP-A- 1 361 196
- WO-A-2005/113112
- DE-A1-102006 028 148
- US-A1- 2006 060 512

## Beschreibung

Die vorliegende Erfindung betrifft eine Filtereinrichtung zum Filtern einer Flüssigkeit einer Brennkraftmaschine, insbesondere in einem Kraftfahrzeug, mit den Merkmalen des Oberbegriffs des Anspruchs 1. Die Erfindung betrifft außerdem ein zugehöriges Filterelement.

Aus der DE 10 2006 028 148 A1 ist eine derartige Filtereinrichtung bekannt, bei der es sich um ein Kraftstofffilter zum Reinigen von Kraftstoff, insbesondere für Verbrennungsmotoren von Kraftfahrzeugen, handelt. Die bekannte Filtereinrichtung weist ein Filtergehäuse zur Aufnahme eines Filterelements auf, wobei das Filtergehäuse einen rohseitigen Zulauf und einen reinseitigen Ablauf aufweist. Das Filterelement trennt im eingesetzten Zustand einen mit dem Zulauf kommunizierenden Rohraum von einem mit dem Ablauf kommunizierenden Reinraum. Bei der bekannten Filtereinrichtung weist das Filtergehäuse außerdem einen rohseitigen Rücklauf auf, der mithilfe eines am Filterelement axial und exzentrisch abstehenden Zapfens verschlossen ist, wenn das Filterelement in das Filtergehäuse eingesetzt ist.

Eine ähnliche Filtereinrichtung ist aus der EP 1 229 985 B1 bekannt, bei der es sich bevorzugt um ein Ölfilter zum Reinigen von Schmieröl handelt. Bei dieser Filtereinrichtung weist das Filtergehäuse einen mit dem Rohraum kommunizierenden Leerlauf auf, der für einen am Filterelement ausgebildeten, axial und exzentrisch abstehenden Zapfen eine Zapfenaufnahme bildet, in die der Zapfen im eingesetzten Zustand des Filterelements eingesteckt ist. Der Zapfen verschließt somit den Leerlauf, wenn das Filterelement ordnungsgemäß in das Filtergehäuse eingesetzt ist. Zum vereinfachten Auffinden und Einführen des Zapfens in diese Zapfenaufnahme ist bei der bekannten Filtereinrichtung am Gehäuse eine konzentrisch angeordnete und schraubenförmig ansteigende bzw. abfallende Rampe vorgesehen, wobei die Zapfenaufnahme, also ein Einlassbereich des Leerlaufs zwischen einem unteren Rampenende und einem oberen Rampenende angeordnet ist. Beim Aufschrauben eines Deckels, mit dem das Filterelement zusammen eingesetzt bzw. eingeschraubt wird, findet der Zapfen durch die Drehbewegung des Filterelements und durch das Abgleiten des Zapfens entlang der Rampe selbsttätig die Zapfenaufnahme, kann darin eindringen und den Leerlauf verschließen. Bei einer besonders vorteilhaften Ausführungsform der bekannten Filtereinrichtung können die Rampe und der Zapfen nach dem Schlüssel-Schloss-Prinzip zusammenwirken, so dass nur ein mit einem an die Rampe adaptierten Zapfen versehenes Filterelement so mit dem Gehäuse der bekannten Filtereinrichtung verwendbar ist, dass der Zapfen beim Aufschrauben des Deckels selbsttätig die Zapfenaufnahme findet und den Leerlauf verschließt.

Bei fehlendem Filterelement oder bei der Verwendung eines nicht speziell an das Filtergehäuse adaptierten Filterelements kann eine ausreichende Reinigung der jeweiligen Flüssigkeit für den Betrieb der Brennkraftmaschine nicht sichergestellt werden. Dementsprechend erhöht sich die Gefahr einer Beschädigung der Brennkraftmaschine durch in der jeweiligen Flüssigkeit mitgeführte Verunreinigungen.

Aus der EP 1 361 196 A1 ist eine Wasserreinigungseinrichtung bekannt, die ein Gehäuse und eine darin austauschbar einsetzbare Kartusche besitzt. An der Kartusche ist ein axial abstehender Zapfen vorgesehen, der beim Einsetzen der Kartusche in das Gehäuse einen im Gehäuse ausgebildeten Schalter betätigt. Somit kann das Fehlen bzw. das Vorhandensein der Kartusche detektiert werden.

Die vorliegende Erfindung beschäftigt sich mit dem Problem, für eine Filtereinrichtung der eingangs genannten Art eine verbesserte Ausführungsform anzugeben, die sich insbesondere dadurch auszeichnet, dass das Fehlen des Filterelements bzw. die Verwendung eines nicht speziell an das Filtergehäuse angepassten Filterelements leichter vermieden werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Filtereinrichtung mit einem Signalgeber auszustatten, der das Vorhandensein bzw. das Fehlen des Zapfens und somit eines mit dem Zapfen ausgestatteten Filterelements detektieren und signalisieren kann. Diese Information kann beispielsweise einer Fahrzeugelektronik übermittelt werden, beispielsweise um einem Fahrer das Fehlen des Filterelements anzuzeigen. Ebenso ist es grundsätzlich möglich, dass die Fahrzeugelektronik bei fehlendem Filterelement ein Starten der Brennkraftmaschine verhindert. Durch die vorgeschlagene Bauweise kann somit effektiv eine Beschädigung der Brennkraftmaschine durch Verunreinigungen, die bei fehlendem Filterelement der Brennkraftmaschine zugeführt werden könnten, vermieden werden.

Der Signalgeber arbeitet elektrisch, das heißt, er sendet bei seiner Betätigung ein entsprechendes elektrisches Signal, das mit dem Vorhandensein bzw. mit dem Fehlen des Zapfens korreliert, an ein entsprechendes Steuerungssystem. Beim Signalgeber kann es sich entweder um einen Reed-Kontakt oder um ein RFID-Transponder-Lesegerät (RFID = Radio Frequency Identification) oder um einen Hall-Sensor handeln.

Die Zapfenaufnahme kann grundsätzlich als Bindloch oder Sackloch ausgestaltet sein, also im Grunde keine weitere Funktion als die Aufnahme des Zapfens aufweisen. Bei einer anderen Ausführungsform kann die Zapfenaufnahme durch einen Einlassbereich eines mit dem Rohraum kommunizierenden Rücklaufs oder Leerlaufs gebildet sein. Hierdurch erhält der Zapfen in Verbindung mit der durch den Rücklauf, bzw. Leerlauf gebildeten Zapfenaufnahme eine Zusatzfunktion, nämlich die Sperrung des Rücklaufs bzw. des Leerlaufs beim Eindringen in die Zapfenaufnahme. Bei fehlendem Zapfen oder bei fehlendem Filterelement kann die über den Zulauf in das Filtergehäuse geförderte Flüssigkeit zu einem wesentlichen Anteil durch den Rücklauf bzw. durch den Leerlauf wieder abfließen, beispielsweise in eine Reservoir aus dem eine entsprechende Fördereinrichtung die Flüssigkeit zum Zulauf fördert. Auf diese Weise kann sich im Ablauf ein erwünschter Druck nicht aufbauen. Der Signalgeber kann nun durch einen Drucksensor gebildet sein, der im Rücklauf oder im Leerlauf angeordnet ist und bei einem vorbestimmten Druckanstieg das Fehlen des Zapfens bzw. des Filterelements signalisiert. Bei ausbleibendem Druckanstieg im Leerlauf bzw. im Rücklauf geht eine entsprechende Steuerungslogik davon aus, dass der Rücklauf bzw. der Leerlauf verschlossen ist und zwar durch den Zapfen. Das heißt, bei ausbleibendem Druckanstieg wird das Vorhandensein des Zapfens bzw. des Filterelements signalisiert. Alternativ kann der Signalgeber auch einen im Ablauf angeordneten Drucksensor aufweisen bzw. kann ein ggf. ohnehin im Ablauf angeordneter Drucksensor als Signalgeber genutzt werden. Mit Hilfe dieses Drucksensors kann eine entsprechende Steuerungslogik erkennen, dass der Zapfen und somit das Filterelement nicht vorhanden ist, wenn sich im Ablauf ein vorbestimmter Druck nicht aufbaut. Auch kann bei unzureichendem Druckanstieg das Fehlen des Filterelements signalisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Querschnitt durch eine Filtereinrichtung im Bereich einer Zapfenaufnahme,
- Fig. 2: eine Ansicht wie in Fig. 1, jedoch bei einer anderen, nicht erfindungsgemäßen Ausführungsform,
- Fig. 3 bis 5: jeweils eine vergrößerte Detailansicht im Bereich der Zapfenaufnahme, bei verschiedenen Ausführungsformen,
- Fig. 6: eine stark vereinfachte Draufsicht auf eine Rampe,
- Fig. 7 u. 8: jeweils stark vereinfachte Ansichten eines Zapfens im Bereich der Rampe bei verschiedenen Ausführungsformen.

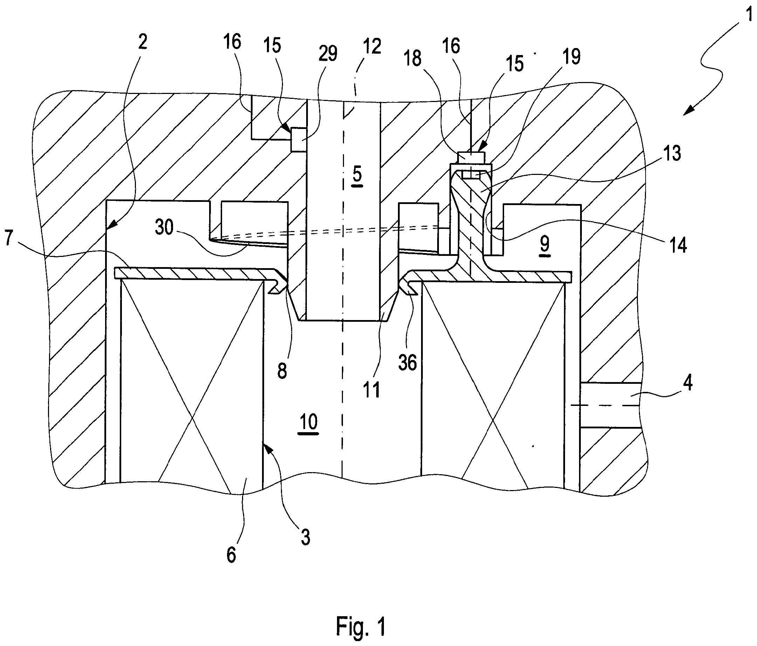

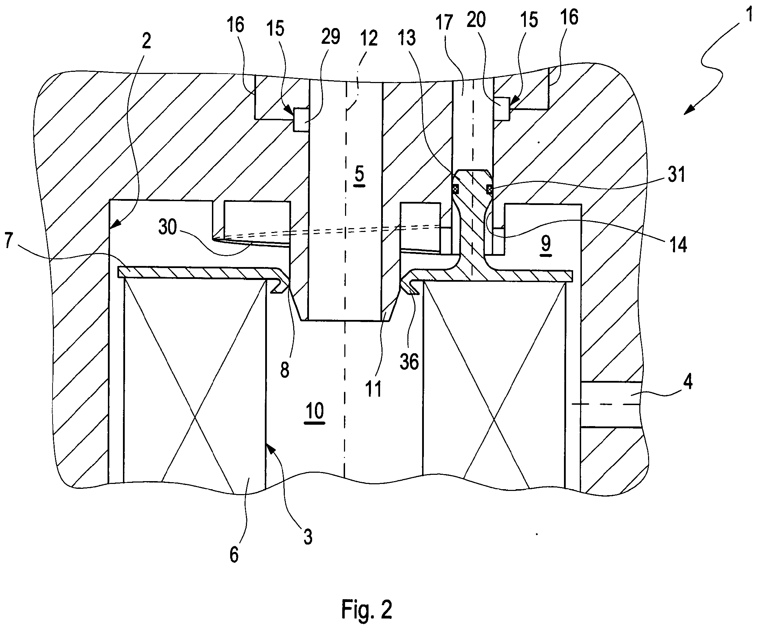

Entsprechend den Fig. 1 und 2 umfasst eine Filtereinrichtung 1 ein Filtergehäuse 2, das zur Aufnahme eines Filterelements 3 ausgestaltet ist. Das Filtergehäuse 2 weist einen rohseitigen Zulauf 4 und einen reinseitigen Ablauf 5 auf. Die Filtereinrichtung 1 dient zum Filtern einer Flüssigkeit einer Brennkraftmaschine, die insbesondere in einem Kraftfahrzeug angeordnet sein kann. Insbesondere dient die Filtereinrichtung 1 zum Filtern von Schmieröl der Brennkraftmaschine. Grundsätzlich ist auch eine Ausführungsform denkbar, bei welcher die Filtereinrichtung 1 zum Filter von Kraftstoff oder einer beliebigen anderen Flüssigkeit der Brennkraftmaschine dient.

Das Filterelement 3 ist bevorzugt als Ringfilterelement ausgestaltet und weist dementsprechend einen ringförmigen oder zylindrischen Filterkörper 6 auf. Der Filterkörper 6 besteht aus einem üblichen Filtermaterial wie z.B. Filterpapier oder Filtervlies. An einem in den Fig. 1 und 2 gezeigten axialen Ende weist das Filterelement 3 eine Endscheibe 7 auf, die flüssigkeitsdicht mit dem Filterkörper 6 verbunden ist. Die Endscheibe 7 kann mit dem Filterkörper 6 verschweißt oder verklebt oder auf sonstige geeignete Weise verbunden sein.

Beispielsweise kann das Filtermaterial des Filterkörpers 6 in die Endscheibe 7 einplastifiziert sein. Die gezeigte Endscheibe 7 besitzt eine zentrale Öffnung 8, so dass es sich hier um eine offene Endscheibe 7 handelt. An seinem anderen axialen Ende kann das Filterelement 3 eine weitere Endscheibe aufweisen, die offen oder geschlossen sein kann. Das Filterelement 3 trennt im Filtergehäuse 2 einen Rohraum 9 von einem Reinraum 10. Der Rohraum 9 kommuniziert mit dem Zulauf 4, während der Reinraum 10 mit dem Ablauf 5 kommuniziert. Der Reinraum 10 ist im Beispiel in dem vom Filterkörper 6 umschlossenen Innenraum des Filterelements 3 ausgebildet. Das Filterelement 3 ist im Beispiel somit radial von außen nach innen durchströmbar. Das Filtergehäuse 2 besitzt einen Stutzen 11, auf den die offene Endscheibe 7 mit ihrer Öffnung 8 aufsteckbar ist. Durch den Stutzen 11 kommuniziert der Ablauf 5 mit dem Inneren des Filterelements 3, also mit dem Reinraum 10. An der offenen Endscheibe 7 ist eine Radialdichtung 36 angeformt, die mit dem Stutzen 11 zusammenwirkt.

Das Filterelement 3 weist einen bezüglich einer Längsmittelachse 12 des Filterelements 3 axial und exzentrisch abstehenden Zapfen 13 auf. Dieser Zapfen 13 ist bevorzugt an der Endscheibe 7 ausgebildet. Beispielsweise ist der Zapfen 13 integral an der Endscheibe 7 ausgeformt. Ebenso kann der Zapfen 13 ganz oder teilweise an die Endscheibe 7 angebaut sein.

Das Gehäuse 2 weist eine Zapfenaufnahme 14 auf. Diese ist zum Rohraum 9 hin offen. Filtergehäuse 2 und Filterelement 3 sind so aufeinander abgestimmt, dass der Zapfen 13 bei in das Filtergehäuse 2 ordnungsgemäß eingesetztem Filterelement 3 in die Zapfenaufnahme 14 axial hineinragt bzw. in diese eingesteckt ist.

Die Filtereinrichtung 1 weist außerdem zumindest einen Signalgeber 15 auf, der so ausgestaltet und/oder angeordnet ist, dass damit das Fehlen und/oder das Vorhandensein des Zapfens 13 in der Zapfenaufnahme 14 erkennbar und ggf. elektrisch signalisierbar ist. Der jeweilige Signalgeber 15 kann beispielsweise über eine entsprechende Signalleitung 16 an eine hier nicht gezeigte Steuerung angeschlossen sein.

Bei der in Fig. 1 gezeigten erfindungsgemäßen Ausführungsform ist die Zapfenaufnahme 14 als Blindloch ausgestaltet. Insbesondere besitzt dieses Blindbloch bzw. die Zapfenaufnahme 14 neben der Fähigkeit, den Zapfen 13 aufzunehmen, somit keine weitere Funktionalität. Im Unterschied dazu zeigt Fig. 2 eine nicht erfindungsgemäße Ausführungsform, bei welcher die Zapfenaufnahme 14 durch einen Einlassbereich eines Rücklaufs oder Leerlaufs 17 gebildet ist, der mit dem Rohraum 9 kommuniziert. Der Zapfen 13 erfüllt hier zusätzlich die Funktion, den Leerlauf bzw. den Rücklauf 17 zu verschließen, wenn er in die Zapfenaufnahme 14, also in den Einlassbereich des Rücklaufs oder Leerlaufs 17 eingesteckt ist. Der Zapfen 13 kann hierzu mit einer entsprechenden Radialdichtung 31 ausgestattet sein, bei der es sich beispielsweise um einen O-Ring handelt.

Im folgenden werden mehrere unterschiedliche, rein exemplarisch ausgewählte Ausführungsformen für den Signalgeber 15 näher erläutert, die sowohl bei der in Fig. 1 gezeigten Ausführungsform mit der als Blindloch ausgestalteten Zapfenaufnahme 14 als auch bei der in Fig. 2 gezeigten Ausführungsform mit der durch den Einlassbereich des Rücklaufs bzw. Leerlaufs 17 gebildeten Zapfenaufnahme 14 kumulativ oder alternativ oder beliebig kombiniert realisierbar sind. Entsprechend Fig. 1 kann der Signalgeber 15 gemäße einer erfindungsgemäßen Ausführungsform einen Hall-Sensor 18 aufweisen. Am Zapfen 13 kann hierzu ein Kontaktelement 19 angebracht sein, dessen Annäherung durch den Hall-Sensor 18 detektierbar ist. Beim Kontaktelement 19 kann es sich beispielsweise um einen Magnetkörper oder um einen Metallkörper handeln.

Entsprechend der nicht erfindungsgemäßen Fig. 2 kann der Signalgeber 15 zusätzlich einen im Rücklauf 17 oder im Leerlauf 17 angeordneten Drucksensor 20 aufweisen, mit dem der Druck der Flüssigkeit im Leerlauf 17 bzw. im Rücklauf 17 ermittelbar ist. Erreicht dieser Druck einen vorbestimmten Wert, geht eine Steuerungslogik davon aus, dass der Zapfen 13 nicht vorhanden ist bzw. dass das gesamte Filterelement 3 nicht vorhanden ist. Bleibt der Druckanstieg im Leerlauf 17 bzw. im Rücklauf 17 aus, geht die Steuerlogik davon aus, dass der Zapfen 13 den Einlassbereich 14 des Leerlaufs 17 bzw. des Rücklaufs 17 ordnungsgemäß verschließt. In der Folge muss das Filterelement 3 vorhanden sein.

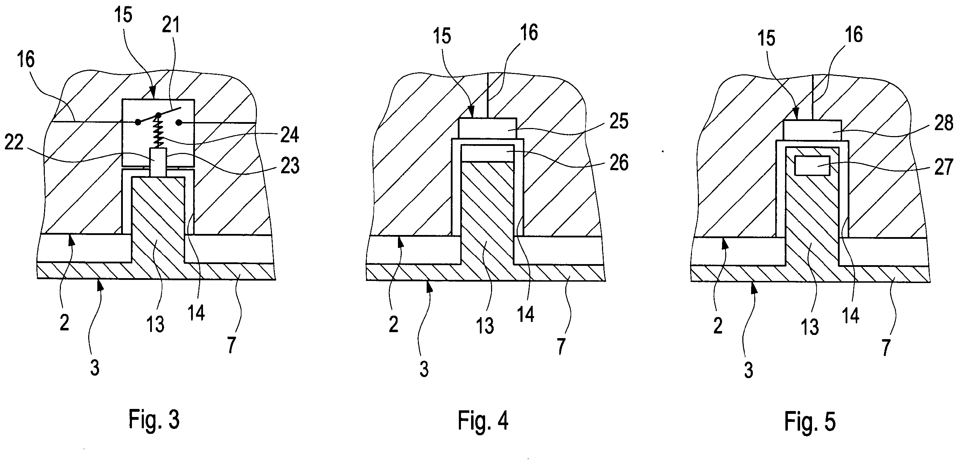

Bei der in Fig. 3 gezeigten, nicht erfindungsgemäßen Variante kann der Signalgeber 15 einen Schalter 21 aufweisen, der über einen Taster 22 durch körperlichen Kontakt mit dem Zapfen 13 betätigbar ist. Der Taster 22 besitzt ein axial verstellbar gelagertes Betätigungsglied 23, das beispielsweise mit Hilfe einer Feder 24 in die Zapfenaufnahme 14 hineinragend vorgespannt ist. Bei fehlenden Zapfen 13 ist der Schalter 21 beispielsweise geschlossen, wodurch das Fehlen des Zapfens 13 und somit des Filterelements 3 signalisiert wird. Bei in die Zapfenaufnahme 14 eingesteckten Zapfen 13 öffnet der Schalter 21 und signalisiert dadurch das Vorhandensein des Filterelements 3. Es ist klar, dass bei einer anderen Ausführungsform der Schalter 21 erst bei in die Zapfenaufnahme 14 eingesetzten Zapfen 13 schließt und bei fehlendem Zapfen 13 offen ist.

Bei der in Fig. 4 gezeigten erfindungsgemäßen Ausführungsform kann der Signalgeber einen Reed-Kontakt 25 aufweisen, der mittels magnetischer Kräfte betätigbar ist. Hierzu kann der Zapfen 13 mit einem Dauermagneten 26 ausgestattet sein.

Gemäß Fig. 5 kann bei einer anderen erfindungsgemäßen Ausführungsform vorgesehen sein, den Signalgeber 15 mit einem RFID-Transponder-Lesegerät 28 auszustatten, das mit einem RFID-Transponder 27 zum drahtlosen Datenaustausch zusammenwirken kann. Dieser RFID-Transponder 27 ist dabei im Zapfen 13 angeordnet. Das Transponder-Lesegerät 28 ist im Filtergehäuse 2 an geeigneter Stelle angeordnet. Durch den RFID-Transponder 27 kann das Lesegerät 28 zumindest die Information auslesen, dass ein bestimmtes Filterelement 3 vorhanden ist. Des weiteren kann optional vorgesehen sein, dass über den RFID-Transponder 27 auch zusätzliche Daten und Informationen übertragbar sind, wie zum Beispiel Herstellungsdatum und Herstellungsort des Filterelements 3 sowie eine genaue Typenbezeichnung des Filterelements 3.

Entsprechend den Fig. 1 und 2 kann der Signalgeber 15 außerdem einen im Ablauf 5 angeordneten Drucksensor 29 aufweisen, mit dem ein Druck in der im Ablauf 5 vorhandenen Flüssigkeit ermittelt werden kann. Steigt der Druck im Ablauf 5 auf einen vorbestimmten Wert an, geht eine Steuerlogik davon aus, dass der Leerlauf 17 beziehungsweise der Rücklauf 17 verschlossen ist, so dass ein passendes Filterelement 3 mit Zapfen 13 vorhanden sein muss. Kommt es nicht zum vorbestimmten Druckanstieg im Ablauf 5 muss die Steuerlogik davon ausgehen, dass der Rücklauf 17 beziehungsweise der Leerlauf 17 offen ist, so dass entweder das Filterelement 3 fehlt oder das Filterelement 3 nicht richtig eingesetzt ist oder dass kein richtiges Filterelement 3 eingesetzt ist.

Entsprechend einer besonders vorteilhaften Ausführungsform können der Rücklauf 17 beziehungsweise der Leerlauf 17 so gedrosselt sein, dass eine Fördereinrichtung, die die jeweilige Flüssigkeit durch den Zulauf 4 fördert, auch bei fehlendem Filterelement 3 einen für eine Notversorgung der Brennkraftmaschine ausreichende Menge an Flüssigkeit durch den Ablauf 5 fördern kann. Beispielsweise lässt sich so auch bei fehlendem Filterelement 3 ein Notvolumenstrom fördern, mit dem vorübergehend eine Notversorgung der Brennkraftmaschine gewährleistet werden kann. Für diesen Notbetrieb kann eine entsprechende Steuerung dann insbesondere reduzierte Leistungsdaten für die Brennkraftmaschine vorgeben, so dass das damit ausgestattete Fahrzeug beispielsweise nicht mehr mit voller Leistung, sondern nur noch mit einer stark reduzierten Leistung zumindest bis zu einer Werkstatt bewegt werden kann.

Bei den in den Fig. 1 und 2 gezeigten Ausführungsformen ist das Filterelement 3 im Filtergehäuse 2 hängend angeordnet. Es ist klar, dass grundsätzlich auch eine stehende Anordnung für das Filterelement 3 im Filtergehäuse 2 möglich ist. Ferner kann auch eine liegende Anordnung des Filterelements 3 im Filtergehäuse 2 realisiert werden.

Entsprechend den Fig. 1 und 2 kann das Gehäuse 2 eine Rampe 30 aufweisen. Diese ist kreisbahnförmig ausgestaltet und führt zur Zapfenaufnahme 14 hin. Hierzu fällt die Rampe 30 schraubenförmig zur Zapfenaufnahme 14 hin ab. Entlang der Rampe 30 kann der Zapfen 13 beim Eindrehen des Filterelements 3 abgleiten. Mit Hilfe der Rampe 30 wird das Einführen des Zapfens 13 in die Zapfenaufnahme 14 erheblich vereinfacht.

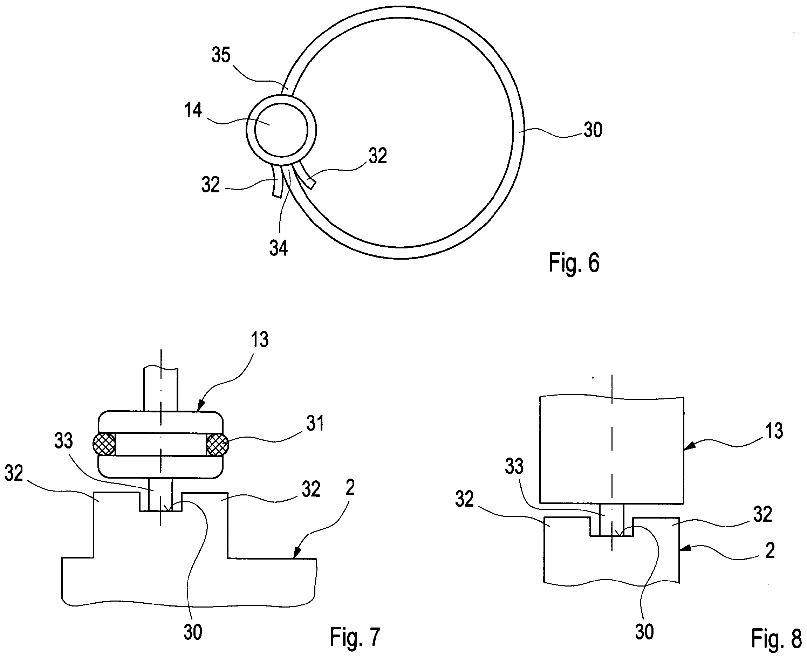

Sofern das Filtergehäuse 2 mit einer derartigen Rampe 30 ausgestattet ist, lässt sich insbesondere auch eine in den Fig. 6 bis 8 näher erläuterte besondere Ausführungsform realisieren. Bei diesen speziellen Ausführungsformen sind die Rampe 30 und der Zapfen 13 so ausgestaltet und aufeinander abgestimmt, dass sie nach dem Schlüssel-Schloss-Prinzip zusammenwirken. Dieses Schlüssel-Schloss-Prinzip bewirkt, dass nur solche Filterelemente 3 ordnungsgemäß mit der Filtereinrichtung 1 verwendbar sind, bei denen der Zapfen 13 speziell an die Rampe 30 adaptiert ist. Die hierbei relevante ordnungsgemäße Verwendung beinhaltet, dass der Zapfen 13 beim Anbringen beziehungsweise beim Drehen des Filterelements 3 selbsttätig die Zapfenaufnahme 14 findet und darin eindringt. Bei nicht speziell an die Filtereinrichtung 1 adaptiertem Filterelement 3 verhindert das Schlüssel-Schloss-Prinzip, dass der gegebenenfalls vorhandene Zapfen 13 beim Aufschrauben beziehungsweise beim Eindrehen des Filterelements 3 die Zapfenaufnahme 14 selbsttätig finden kann. Hierdurch soll erreicht werden, dass nur für die Filtereinrichtung 1 genau adaptierte Filterelemente 3 verwendet werden können, beispielsweise um eine ordnungsgemäße Filtrierfunktion gewährleisten zu können.

Zur Realisierung dieses Schlüssel-Schloss-Prinzips kann entsprechend den Fig. 6 bis 8 eine Einführkontur mit Führungskörpern 32 vorgesehen sein, die einerseits oder beiderseits der Rampe 30 angeordnet sein können und axial über die Rampe 30 vorstehen. Ein entlang der Rampe 30 abgleitender Zapfen 13 kann nur dann bis zur Zapfenaufnahme 14 gelangen, wenn er einen an diese Führungskörper 32 adaptierten, axial vom jeweiligen Zapfen 13 abstehenden Vorsprung 33 aufweist. Bei diesem Vorsprung 33 handelt es sich beispielsweise um einen kegelförmigen oder stiftförmigen oder stegförmigen Ansatz, der den Kontakt zwischen dem Zapfen 13 und der Rampe 30 herstellt. Dieser Vorsprung 33 ist axial so dimensioniert, dass er den Zapfen 13 über die Führungselemente 32 hinwegheben kann. Das heißt, der über den Vorsprung 33 auf der Rampe 30 abgleitende Zapfen 13 ist axial von den Führungskörpern 32 so weit beabstandet, dass er an den Führungskörpern 32 vorbei fluchtend zur Zapfenaufnahme 14 ausrichtbar ist. Entsprechend den Fig. 6 bis 8 kann der Vorsprung 33 zwischen den Führungskörpern 32 hindurch die Rampe 30 kontaktieren und dadurch das Abgleiten des Zapfens 13 ermöglichen.

Gemäß Fig. 6 sind die Führungselemente 32 im Bereich des unteren Rampenendes 34 angeordnet. Die Zapfenaufnahme 14 ist dabei in Umfangsrichtung zwischen dem unteren Rampenende 34 und einem oberen Rampenende 35 angeordnet, das entlang der Rampe 30 bis zum unteren Rampenende 34 abfällt.

Im Übrigen wird hinsichtlich des Schlüssel-Schloss-Prinzips und hinsichtlich seiner Realisierung auf die eingangs genannte EP 1 229 985 B1 verwiesen.

## Patentansprüche

1. Filtereinrichtung zur Verwendung in einem Kraftfahrzeug, zum Filtern einer Flüssigkeit einer Brennkraftmaschine,
- mit einem Filtergehäuse (2) zur Aufnahme eines Filterelements (3),
- wobei das Filtergehäuse (2) einen rohseitigen Zulauf (4) und einen reinseitigen Ablauf (5) aufweist,
- wobei das Filterelement (3) im eingesetzten Zustand einen mit dem Zulauf (4) kommunizierenden Rohraum (9) von einem mit dem Ablauf (5) kommunizierenden Reinraum (10) trennt,
- wobei das Filterelement (3) einen axial und exzentrisch abstehenden Zapfen (13) aufweist, der im eingesetzten Zustand in eine im Filtergehäuse (2) ausgebildete Zapfenaufnahme (14) eingesteckt ist,
**dadurch gekennzeichnet,**
- **dass** zumindest ein Signalgeber (15) vorgesehen ist, mit dem das Vorhandensein und/oder das Fehlen des Zapfens (13) in der als Blindloch ausgestalteten Zapfenaufnahme (14) erkennbar und signalisierbar ist,
- **dass** der in die Zapfenaufnahme (14) eingesteckte Zapfen (13) mit einem solchen Signalgeber (15) zum Erzeugen elektrischer, das Vorhandensein und/oder das Fehlen des Zapfens (13) signalisierender Signale zusammenwirkt,
- **dass** der Signalgeber (15) einen Reed-Kontakt (25) oder ein RFID-Transponder-Lesegerät (28) oder einen Hall-Sensor (18) aufweist.

2. Filtereinrichtung nach Anspruch 1,
**dadurch gekennzeichnet,**
**dass** das Filterelement (3) als Ringfilterelement ausgestaltet ist.

3. Filtereinrichtung nach Anspruch 1 oder 2,
**dadurch gekennzeichnet,**
**dass** das Filterelement (3) einen Filterkörper (6) mit mindestens einer Endscheibe (7) aufweist, die flüssigkeitsdicht mit dem Filterkörper (6) verbunden ist.

4. Filtereinrichtung nach Anspruch 3,
**dadurch gekennzeichnet,**
**dass** der Zapfen (13) an der Endscheibe (7) ausgebildet ist, wobei die Endscheibe (7) eine zentrale Öffnung (8) besitzt.

5. Filtereinrichtung nach einem der Ansprüche 1 bis 4,
**dadurch gekennzeichnet,**
**dass** das Gehäuse (2) eine kreisbahnförmige, zur Zapfenaufnahme (14) hinführende Rampe (30) aufweist, entlang der der Zapfen (13) beim Eindrehen des Filterelements (3) abgleitet.

6. Filtereinrichtung nach einem der Ansprüche 1 bis 5,
**dadurch gekennzeichnet,**
**dass** das Filterelement (3) im Filtergehäuse (2) stehend oder hängend oder liegend angeordnet ist.

7. Filtereinrichtung nach einem der Ansprüche 1 bis 6,
**dadurch gekennzeichnet,**
**dass** die Filtereinrichtung (1) zum Filtern von Schmieröl oder zum Filtern von Kraftstoff ausgestaltet ist.

8. Filterelement mit einem axial und exzentrisch abstehenden Zapfen (13), das, insbesondere hinsichtlich seiner Abmessungen, so ausgestaltet ist, dass es in einer Filtereinrichtung (1) nach einem der Ansprüche 1 bis 7 verwendbar ist, derart, dass sein Zapfen (13) in eine in einem Gehäuse (2) der Filtereinrichtung (1) ausgebildete Zapfenaufnahme (14) eindringt, wobei der Zapfen (13) ein durch einen Hall-Sensor (18) detektierbares Kontaktelement (19) oder einen Dauermagneten (26) oder einen RFID-Transponder (27) aufweist.

## Claims

1. Filter device for use in a motor vehicle for filtering a fluid of an internal combustion engine,
- with a filter housing (2) for receiving a filter element (3),
- wherein the filter housing (2) has an untreated-side inflow (4) and a clean-side outflow (5),
- wherein the filter element (3), in the state of use, separates an untreated chamber (9) communicating with the inflow (4) from a clean chamber (10) communicating with the outflow (5),
- wherein the filter element (3) has an axially and eccentrically protruding pin (13) which is inserted into a pin receiving portion (14) designed in the filter housing (2) in the state of use,
**characterised in that**
- at least one signal transmitter (15) is provided by means of which the presence and/or absence of the pin (13) in the pin receiving portion (14) designed as a blind hole can be detected and signalled,
- the pin (13) inserted into the pin receiving portion (14) interacts with such a signal transmitter (15) to generate electric signals signalling the presence and/or absence of the pin (13),
- the signal transmitter (15) has a Reed contact (25) or an RFID transponder reading device (28) or a Hall sensor (18).

2. Filter device according to claim 1,
**characterised in that**
the filter element (3) is designed as a ring filter element.

3. Filter device according to claim 1 or 2,
**characterised in that**
the filter element (3) has a filter body (6) with at least one end disc (7) which is connected in a fluid-tight manner to the filter body (6).

4. Filter device according to claim 3,
**characterised in that**
the pin (13) is designed on the end disc (7), wherein the end disc (7) has a central opening (8).

5. Filter device according to any one of claims 1 to 4,
**characterised in that**
the housing (2) has a circular path-shaped ramp (30) leading to the pin receiving portion (14), along which the pin (13) slides when the filter element (3) is screwed in.

6. Filter device according to any one of claims 1 to 5,
**characterised in that**
the filter element (3) is arranged standing or hanging or laying in the filter housing (2).

7. Filter device according to any one of claims 1 to 6,
**characterised in that**
the filter device (1) is designed for filtering lubricant or for filtering fuel.

8. Filter element with an axially and eccentrically protruding pin (13), which, in particular with regard to its dimensions, is designed such that it can be used in a filter device (1) according to any one of claims 1 to 7, such that its pin (13) penetrates into a pin receiving portion (14) designed in a housing (2) of the filter device (1), wherein the pin (13) has a contact element (19) detectable by a Hall sensor (18) or a permanent magnet (26) or an RFID transponder (27).

## Revendications

1. Dispositif de filtrage destiné à l'utilisation dans un véhicule automobile, pour le filtrage d'un liquide d'un moteur à combustion interne,
- avec un boîtier de filtre (2) pour la réception d'un élément de filtre (3),
- dans lequel le boîtier de filtre (2) présente une alimentation (4) côté produit brut et une évacuation (5) côté produit pur,
- dans lequel l'élément de filtre (3) sépare à l'état inséré un espace produit brut (9) communiquant avec l'alimentation (4) d'un espace produit pur (10) communiquant avec l'évacuation (5),
- dans lequel l'élément de filtre (3) présente un tenon (13) dépassant axialement et de manière excentrée qui est enfiché à l'état inséré dans un logement de tenon (14) réalisé dans le boîtier de filtre (2),
**caractérisé en ce**
- **qu'**au moins un générateur de signal (15) est prévu, avec lequel la présence et/ou l'absence du tenon (13) peut être détectée et signalée dans le logement de tenon (14) configuré sous forme de trou borgne,
- **que** le tenon (13) enfiché dans le logement de tenon (14) coagit avec un tel générateur de signal (15) pour la génération de signaux électriques, signalant la présence et/ou l'absence du tenon (13),
- **que** le générateur de signal (15) présente un contact Reed (25) ou un appareil de lecture de transpondeur RFID (28) ou un capteur à effet Hall (18).

2. Dispositif de filtrage selon la revendication 1,
**caractérisé en ce**
**que** l'élément de filtre (3) est configuré sous forme d'élément de filtre annulaire.

3. Dispositif de filtrage selon la revendication 1 ou 2,
**caractérisé en ce**
**que** l'élément de filtre (3) présente un corps de filtre (6) avec au moins un disque d'extrémité (7) qui est relié de manière étanche au liquide au corps de filtre (6).

4. Dispositif de filtrage selon la revendication 3,
**caractérisé en ce**
**que** le tenon (13) est réalisé sur le disque d'extrémité (7), dans lequel le disque d'extrémité (7) possède une ouverture centrale (8).

5. Dispositif de filtrage selon l'une quelconque des revendications 1 à 4,
**caractérisé en ce**
**que** le boîtier (2) présente une rampe (30) menant vers le logement de tenon (14), en forme de bande circulaire, le long de laquelle le tenon (13) glisse lors du vissage de l'élément de filtre (3).

6. Dispositif de filtrage selon l'une quelconque des revendications 1 à 5,
**caractérisé en ce**
**que** l'élément de filtre (3) est agencé dans le boîtier de filtre (2) debout ou suspendu ou à plat.

7. Dispositif de filtrage selon l'une quelconque des revendications 1 à 6,
**caractérisé en ce**
**que** le dispositif de filtrage (1) est configuré pour le filtrage d'huile lubrifiante ou pour le filtrage de carburant.

8. Elément de filtre avec un tenon (13) dépassant axialement et de manière excentrée qui est configuré, en particulier en ce qui concerne ses dimensions, de sorte qu'il puisse être utilisé dans un dispositif de filtrage (1) selon l'une quelconque des revendications 1 à 7, de telle manière que son tenon (13) pénètre dans un logement de tenon (14) réalisé dans un boîtier (2) du dispositif de filtrage (1), dans lequel le tenon (13) présente un élément de contact (19) pouvant être détecté par un capteur à effet Hall (18) ou un aimant permanent (26) ou un transpondeur RFID (27).
